# EUROPEAN PATENT APPLICATION

(11) **EP 4 620 335 A1**
(43) Date of publication of application: **24.09.2025**
(21) Application number: 23890316.5
(22) Date of filing: 21.08.2023
(51) Int. Cl.: A24F 40/57

(54) **AEROSOL GENERATING DEVICE AND HEATING STRUCTURE THEREOF**

(30) Priority: 17.11.2022 CN 202211457367
(71) Applicant: Smoore International Holdings Limited, George Town, Grand Cayman, KY1-1111 (KY)
(72) Inventor: MA, Lei, Shenzhen, Guangdong 518102 (CN); ZHOU, Hongming, Shenzhen, Guangdong 518102 (CN); LI, Rihong, Shenzhen, Guangdong 518102 (CN); DU, Xianwu, Shenzhen, Guangdong 518102 (CN); ZHANG, Guo, Shenzhen, Guangdong 518102 (CN)
(74) Representative: Westphal, Mussgnug & Partner, Patentanwälte mbB
(86) International application number: PCT/CN2023/114110
(87) International publication number: WO 2024/103877

(57) **Abstract**

The present disclosure relates to an aerosol generating device and a heating structure thereof. The heating structure includes a heating element configured to radiate infrared light waves in a power-on state, a tube body for the infrared light waves to pass through, and a temperature measurement unit for temperature measurement. The heating element and a tube wall of the tube body are at least partially spaced apart. The heating element includes a heating portion and a conductive portion connected to one end of the heating portion. One end of the temperature measurement unit is connected to one end of the heating portion, and another end of the temperature measurement unit is connected to the conductive portion. In the present disclosure, the heating element does not cause an aerosol generating substrate to be overheated in high-temperature environments, thereby greatly improving the puffing taste. Moreover, the preheating time is greatly reduced, thereby greatly improving the consumer experience. The connection between the temperature measurement unit and the heating portion can quickly reflect the temperature change process of the heating portion to accurately measure the temperature of the heating element, thereby achieving the precise atomization of the aerosol generating substrate.

## Description

### TECHNICAL FIELD

The present disclosure relates to the field of heat-not-burn atomization, and in particular, to an aerosol generating device and a heating structure thereof.

### BACKGROUND

In related arts, an aerosol generating device is an electronic device used for heating an aerosol generating substrate (solid material such as tobacco and other plant leaf products) without burning it. Generally, the aerosol generating substrate is atomized within 350°C. The disadvantage of this heating method is that since the heating element conducts heat directly or indirectly through a solid material to the aerosol generating substrate, it requires that the working temperature of the heating element should not be too high, and otherwise it will cause the aerosol generating substrate to be overheated to influence the puffing taste of the aerosol generating device. Therefore, how to adapt to the working environment where the working temperature of the heating element is higher than 400°C, and how to detect and control the temperature when the heating element works under conditions higher than 400°C, are urgent problems that need to be solved by those skilled in the art.

### SUMMARY

The technical problem to be solved by the present disclosure is to provide an improved aerosol generating device and a heating structure thereof.

The technical solution adopted by the present disclosure to solve the technical problem is as follows. A heating structure is provided, including a heating element configured to radiate infrared light waves in a power-on state, a tube body for the infrared light waves to pass through, and a temperature measurement unit for temperature measurement, where the heating element and a tube wall of the tube body are at least partially spaced apart, the heating element includes a heating portion and a conductive portion electrically connected to the heating portion, one end of the temperature measurement unit is connected to one end of the heating portion, and the other end of the temperature measurement unit is electrically connected to the conductive portion.

In some embodiments, the temperature measurement unit is at least partially made of a TCR material.

In some embodiments, a temperature coefficient of the TCR material is greater than 300.

In some embodiments, the heating portion includes a double-spiral section arranged longitudinally, one end of the temperature measurement unit is connected to the double-spiral section, and the other end of the temperature measurement unit is connected to the conductive portion.

In some embodiments, the temperature measurement unit is at least partially located within the double-spiral section.

In some embodiments, the temperature measurement unit is located outside the double-spiral section.

In some embodiments, the heating portion is longitudinally arranged and includes a first heating section that is linear and a spiral second heating section wound around the first heating section and connected to one end of the first heating section, one end of the temperature measurement unit is connected to the first heating section, and the other end of the temperature measurement unit is connected to the conductive portion.

In some embodiments, the temperature measurement unit is at least partially located within the spiral second heating section.

In some embodiments, the temperature measurement unit is located outside the spiral second heating section.

In some embodiments, the heating portion is formed by bending or winding a heating wire and includes at least one M-shaped or N-shaped section.

In some embodiments, at least part of the temperature measurement unit and the heating portion jointly form the M-shaped or N-shaped section.

In some embodiments, the heating element is arranged on an inner side of the tube body, and the heating element is spaced apart from an inner wall of the tube body.

In some embodiments, the tube body includes a first sleeve and a second sleeve sleeved over an outer periphery of the first sleeve;
a gap is provided between the first sleeve and the second sleeve, and the gap forms an accommodating cavity for accommodating the heating element; and
the heating element is arranged on the outer periphery of the first sleeve and is spaced apart from an outer wall of the first sleeve, and a heating cavity for heating an aerosol generating substrate is formed on an inner side of the first sleeve.

In some embodiments, an inner wall of the second sleeve is provided with a reflective layer for reflecting the infrared light waves.

In some embodiments, a lower part of the tube body is provided with a fixing base, and the temperature measurement unit is arranged above the fixing base or is partially overlapped with the fixing base.

In some embodiments, a highest working temperature of the heating element is 500°C-1300°C.

In some embodiments, the present disclosure further provides an aerosol generating device, including the heating structure described above.

The present disclosure has the following beneficial effects. In the present disclosure, the heating element can radiate infrared light waves in a power-on state, and the infrared light waves can pass through the tube body to reach and heat the aerosol generating substrate. In a case that the highest working temperature of the heating element reaches 1000°C or above (the working temperature of conventional HNB heating elements generally does not exceed 400°C), it does not cause the aerosol generating substrate to be overheated, thereby greatly improving the puffing taste. Moreover, the preheating time is greatly reduced, thereby greatly improving the consumer experience.

The connection between the temperature measurement unit and the heating portion can quickly reflect the temperature change process of the heating portion to accurately measure the temperature of the heating element, thereby achieving the precise atomization of the aerosol generating substrate.

### BRIEF DESCRIPTION OF THE DRAWINGS

The present disclosure will be further described below in combination with the embodiments with reference to the drawings.
FIG. 1 is a 3D schematic structural diagram of an aerosol generating device according to some embodiments of the present disclosure.
FIG. 2 is a 3D schematic structural diagram of a heating structure of the aerosol generating device in FIG. 1.
FIG. 3 is a 3D schematic structural diagram of a temperature measurement unit of a heating element in FIG. 2.
FIG. 4 is a 3D schematic structural diagram of another temperature measurement unit of a heating element in FIG. 2.
FIG. 5 is a 3D schematic structural diagram of yet another temperature measurement unit of a heating element in FIG. 2.
FIG. 6 is a 3D schematic structural diagram of yet another temperature measurement unit of a heating element in FIG. 2.
FIG. 7 is a 3D schematic structural diagram of a heating structure according to another embodiment of the present disclosure.
FIG. 8 is a 3D schematic structural diagram of another temperature measurement unit of a heating element in FIG. 7.
FIG. 9 is a 3D schematic structural diagram of yet another temperature measurement unit of a heating element in FIG. 7.
FIG. 10 is a 3D schematic structural diagram of yet another temperature measurement unit of a heating element in FIG. 7.

### DETAILED DESCRIPTION

To provide a clearer understanding of the technical features, objectives, and effects of the present disclosure, the specific embodiments of the present disclosure will be described below with reference to the drawings.

In the description of the present disclosure, it needs to be understood that directional and positional relationships indicated by terms such as "longitudinally", "axial", "length", "inner" and "outer" are directional or positional relationships based on the drawings, or directional or positional relationships formed by commonly placing the product of the present disclosure in use, which are only for the purposes of conveniently describing the present disclosure and simplifying the description, instead of indicating or implying that the device or element referred to need to have a specific orientation or be constructed and operated in a specific orientation, and cannot be understood as limitations on the present disclosure.

In addition, terms "first" and "second" are used merely for the purpose of description, and cannot be construed as indicating or implying relative importance or implying a quantity of indicated technical features. Therefore, a feature defined by "first" or "second" may explicitly indicate or implicitly include at least one of such features. In the description of the present disclosure, "multiple" means at least two, such as two or three, unless otherwise specifically defined.

In the present disclosure, unless otherwise explicitly specified and limited, the terms "mount", "connect", "connection", and "fix" are understood in a broad sense. For example, it may be a fixed connection, a detachable connection, or an integral connection; or it may be mechanical connection or electrical connection; or it may be direct connection, indirect connection through an intermediate medium, or internal communication between two elements or interaction relationship between two elements, unless otherwise specified explicitly. Those skilled in the art may understand the specific meanings of the terms in the present disclosure based on specific situations.

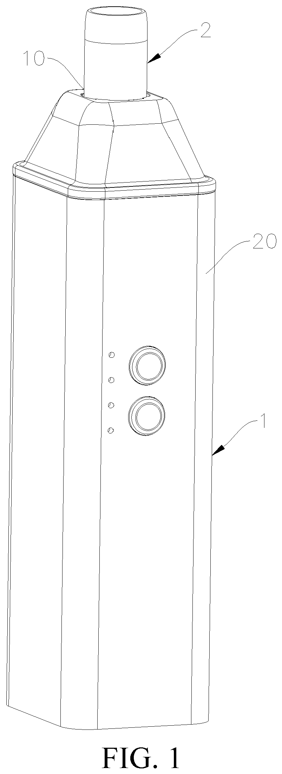

FIG. 1 shows an aerosol generating device 1 and an aerosol generating substrate 2 detachably inserted into one end of the aerosol generating device 1 in some embodiments of the present disclosure. In some embodiments, the aerosol generating device 1 may be in a square column shape for ease of gripping by the user, and may be configured to perform low-temperature baking and heating on the aerosol generating substrate 2 inserted therein to release an aerosol extract from the aerosol generating substrate 2 in a non-burning state. In addition, the atomization stability is good and the puffing taste is excellent. In some embodiments, the aerosol generating substrate 2 may be cylindrical and may be a filamentous or sheet-like solid material made from leaves and/or stems of plants, and aroma components may be further added to the solid material. As can be understood, the aerosol generating device 1 is not limited to be in a square column shape. In some other embodiments, it may also in any other shape such as cylindrical shape or elliptical column shape.

In some embodiments, the aerosol generating device 1 may include a heating structure 10 and a housing 20 for carrying the heating structure 10. In some embodiments, the heating structure 10 may be cylindrical and may allow the aerosol generating substrate 2 to be detachably inserted to heat and bake the aerosol generating substrate 2 from the outer periphery. In some embodiments, the aerosol generating device 1 may further include a power supply assembly (not shown) arranged in the housing 20. The heating structure 10 may be partially inserted into the aerosol generating substrate 2. Specifically, it may be partially inserted into the substrate section of the aerosol generating substrate 2, and generates thermal radiation to heat the substrate section of the aerosol generating substrate 2 in a power-on state, causing it to be atomized to generate an aerosol. In this embodiment, the thermal radiation may be infrared radiation. The heating structure 10 has the advantages of easiness in assembling, simple structure, high atomization efficiency, strong stability, and long service life. The power supply assembly is electrically connected to the heating structure 10 to supply power to the heating structure 10.

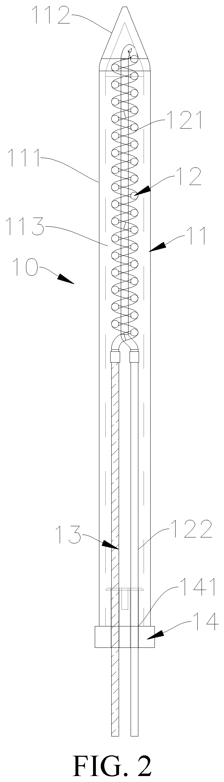

Referring to FIG. 2 together, in some embodiments, the heating structure 10 may include a tube body 11 for infrared light waves to pass through, a heating element 12 configured to radiate infrared light waves in a power-on state, a temperature measurement unit 13, and a fixing base 14. The tube body 11 covers at least part of the heating element 12 and may allow light waves to pass through to reach the aerosol generating substrate 2. Specifically, in this embodiment, the tube body 11 may allow infrared light waves to pass through, thereby facilitating the heating element 12 to radiate infrared light waves to heat the aerosol generating substrate 2. Specifically, a gap is provided between the heating element 12 and the tube body 11. In a power-on state, the heating element 12 quickly heats to increase the temperature up to 1000-1300°C within 1-3 s, the surface temperature of the tube body 11 can be controlled below 350°C, and the overall atomization temperature of the aerosol generating substrate 2 is controlled at 300-350°C, thereby achieving the precise atomization of the aerosol generating substrate 2 mainly in a wave band of 2-5 um. In some embodiments, the heating element 12 may include a heating portion 121 configured to radiate infrared light waves in a power-on state, and a conductive portion 122 arranged at one end of the heating portion 121 and configured to connect to power. One end of the temperature measurement unit 13 is connected to one end of the heating portion 121, and the conductive portion 122 is connected to the other end of the temperature measurement unit 13 and/or the heating portion 121. The connection between the temperature measurement unit 13 and the heating portion 121 can quickly reflect the temperature change process of the heating portion 121 of the heating element 12 to accurately measure the temperature of the heating element 12, thereby achieving the precise atomization of the aerosol generating substrate 2. The fixing base 14 is arranged at a lower open end of the tube body 11, and the temperature measurement unit 13 is arranged above the fixing base 14 or is partially overlapped with the fixing base 14. The conductive portion 122 of the heating element 12 penetrates through the fixing base 14 to connect to power. The highest working temperature of the heating element 12 is 500°C-1300°C, which is much higher than 400°C in the existing technology, thereby solving the problems of easy burning and inconsistent taste in high-temperature working environments, and greatly shortening the preheating time.

In some embodiments, the tube body 11 may be a quartz glass tube. Of course, as can be understood, in some other embodiments, the tube body 11 is not limited to a quartz tube and may be any other window material that allows light waves to pass through, such as infrared transparent glass, transparent ceramics, or diamond.

In some embodiments, the tube body 11 may be a hollow tube. Specifically, the tube body 11 includes a tubular body 111 with a circular cross section, and a pointed structure 112 arranged at one end of the tubular body 111. Of course, as can be understood, in some other embodiments, the cross section of the tubular body 111 is not limited to be circular. The tubular body 111 is a hollow structure with an opening in one end. The tube body 11 may be mounted on the fixing base 14. Specifically, the tube body 11 may be partially inserted into the fixing base 14. The opening of the tube body may be located in the fixing base 14. The pointed structure 112 is arranged at the end of the tubular body 111 away from the opening. By arranging the pointed structure 112, it is convenient for at least part of the heating structure 10 to be inserted into the aerosol generating substrate 2. In this embodiment, a first accommodating cavity 113 is formed on the inner side of the tube body 11. The first accommodating cavity 113 is a cylindrical cavity and may be non-sealed. When the heating element 12 is mounted in it, the first accommodating cavity 113 does not need to be vacuumed or filled with inert gas. Of course, in order to further improve the taste and the service life of the heating element 12, the tube body 11 may also be sealed or vacuumed. As can be understood, in some other embodiments, the heating element 12 may also be arranged on the outer periphery of the tube body 11 in a manner of being spaced apart, and a second accommodating cavity for accommodating the aerosol generating substrate 2 may be formed on the inner side of the tube body 11. In this embodiment, the tube body 11 further includes a positioning portion. The positioning portion is arranged at the opening of the tubular body 111 and may extend radially outwards along the tubular body 111 to form a positioning flange for the mounting and positioning of the tube body 11 and the fixing base 14. In this embodiment, the positioning portion may be integrally formed with the tubular body 111. Of course, as can be understood, in some other embodiments, the positioning portion may be detachably assembled with the tube body 11 by sleeving, screwing, or clamping, for example. In this embodiment, a gap is provided between the inner wall of the tube body 11 and the heating element 12. The gap may be filled with air or maintained in a vacuum state. By providing the gap, there can be no direct contact between the tube body 11 and the heating element 12.

In some embodiments, the number of the heating element 12 may be one, which may be longitudinally arranged and wound to form a heating portion 121 that is spiral on the whole. Specifically, the heating element 12 may be cylindrical on the whole and may be wound to form a single-spiral structure, double-spiral structure, M-shaped structure, N-shaped structure, or structure with any other shape. Of course, as can be understood, in some other embodiments, the number of the heating element 12 is not limited to one, and may be two or more. The shape of the heating element 12 is not limited to a cylindrical shape. In some embodiments, the shape of the heating element 12 may be a sheet shape.

In this embodiment, the heating portion 121 may be placed in the tube body 11, spaced apart from the tube wall of the tube body 11 on the whole, and configured to radiate infrared light waves in a power-on state. The infrared light waves may pass through the tube body 11 to reach the aerosol generating substrate 2. Of course, as can be understood, in some other embodiments, the heating portion 121 may also be partially spaced apart from the tube wall of the tube body 11. In this embodiment, the heating portion 121 may be in a longitudinally elongated spiral shape. Of course, as can be understood, in some other embodiments, the heating portion 121 is not limited to a spiral shape.

In this embodiment, one end of the heating portion 121 is provided with a conductive portion 122. The conductive portion 122 is connected to the heating portion 121, may be led out from the opening of the tube body 11, penetrate through the fixing base 14, and be electrically connected to a power supply assembly. In this embodiment, the conductive portion 122 may be fixed to the heating portion 121 through welding to form an integrated structure. Of course, as can be understood, in some other embodiments, the heating portion 121 may be integrally formed with the conductive portion 122. In this embodiment, the number of the conductive portions 122 may be two. The two conductive portions 122 may be spaced apart, be respectively connected to two ends of the heating portion 121, extend towards the same end, and penetrate through the tube body 11 from the opening of one end of the tube body 11. In this embodiment, the conductive portion 122 may be a lead wire, which may be welded to the heating portion 121. Of course, as can be understood, in some other embodiments, the conductive portion 122 is not limited to a lead wire and may be any other conductive structure. By arranging the conductive portion 122 at one end of the heating portion 121 and leading it out from the tube body 11, the entire heating structure 10 can be conveniently assembled, thereby simplifying the assembling process. During assembling, the heating structure 10 may be mounted on a supporting base (not shown), and then enabled to be in contact with a conductive member located in the supporting base.

In some embodiments, the heating element 12 may include a heating substrate for generating heat in a power-on state, and an infrared radiation layer. The heating substrate may generate heat in a power-on state. The infrared radiation layer is arranged on the outer surface of the heating substrate and is configured to radiate the heat generated by the heating substrate. In this embodiment, the heating substrate and infrared radiation layer are concentrically distributed on the cross section of the heating portion.

In this embodiment, the heating substrate may be cylindrical on the whole. Specifically, the heating substrate may be a heating wire. Of course, as can be understood, in some other embodiments, the heating substrate may not be limited to be cylindrical, but may be in a sheet shape, that is, the heating substrate may be a heating sheet. The heating substrate includes a metal substrate with high-temperature oxidation resistance. The metal substrate may be a metal wire. Specifically, the heating substrate may be a nickel-chromium alloy substrate (such as nickel-chromium alloy wire), iron-chromium-aluminum alloy substrate (such as iron-chromium-aluminum alloy wire) or the like made of a metal material with good high-temperature oxidation resistance, high stability, and good deformation resistance. In this embodiment, the radial size of the heating substrate may be 0.15 mm-0.8 mm.

In this embodiment, the heating element 12 further includes an antioxidant layer, and the antioxidant layer is formed between the heating substrate and the infrared radiation layer. Specifically, the antioxidant layer may be an oxide film, the heating substrate undergoes high-temperature heat treatment to form a dense oxide film on its own surface, and the oxide film forms the antioxidant layer. Of course, as can be understood, in some other embodiments, the antioxidant layer is not limited to including an oxide film formed by itself. In some other embodiments, it may be an antioxidant coating layer coated on the outer surface of the heating substrate. By forming the antioxidant layer, it can ensure that the heating substrate is not or is rarely oxidized when heated in the air environment, thereby improving the stability of the heating substrate. Therefore, there is no need to vacuum and fill inert gas or reducing gas into the first accommodating cavity 113, nor to seal the opening, thereby simplifying the assembling process of the entire heating structure 10 and reducing the manufacturing cost. In this embodiment, the thickness of the antioxidant layer may be selectively 1 um-150 um. When the thickness of the antioxidant layer is less than 1 um, the heating substrate is easily oxidized. When the thickness of the antioxidant layer is greater than 150 um, it will reduce the heat conduction between the heating substrate and the infrared radiation layer.

In this embodiment, the infrared radiation layer may be an infrared layer. The infrared layer may be an infrared layer-forming substrate formed on the side of the antioxidant layer away from the heating substrate under high-temperature heat treatment. In this embodiment, the infrared layer-forming substrate may be a silicon carbide, spinel, or composite substrate. Of course, as can be understood, in some other embodiments, the infrared radiation layer is not limited to an infrared layer. In some other embodiments, the infrared radiation layer may be a composite infrared layer. In this embodiment, the infrared layer may be formed on the side of the antioxidant layer away from the heating substrate through dip coating, spray coating, brush coating, and other methods. The thickness of the infrared radiation layer may be 10 um-300 um. When the thickness of the infrared radiation layer is between 10 um-300 um, the thermal radiation effect is better, and the atomization efficiency and taste of the aerosol generating substrate 2 are better. Of course, as can be understood, in some other embodiments, the thickness of the infrared radiation layer is not limited to 10 um-300 um.

In some embodiments, the heating element 12 further includes a bonding layer arranged between the antioxidant layer and the infrared radiation layer. The bonding layer may be configured to prevent the heating substrate from being broken down locally, thereby further improving the bonding strength between the antioxidant layer and the infrared radiation layer. In some embodiments, the bond in the bonding layer may be glass powder, that is, the bonding layer may be a glass powder layer.

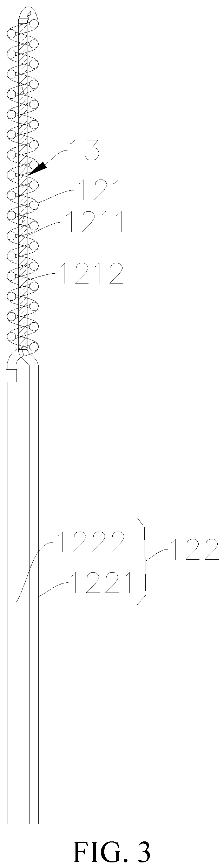

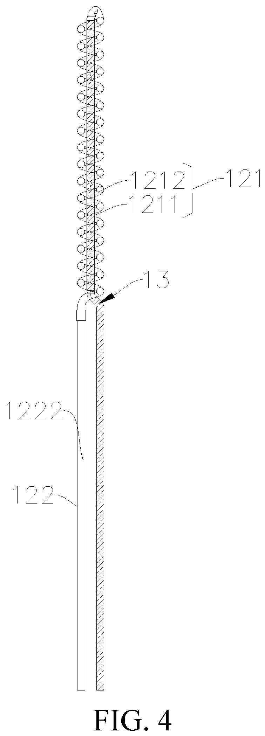

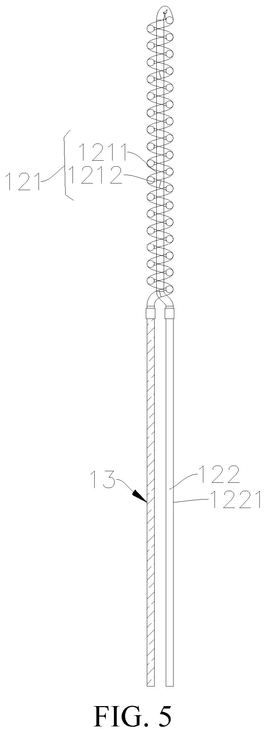

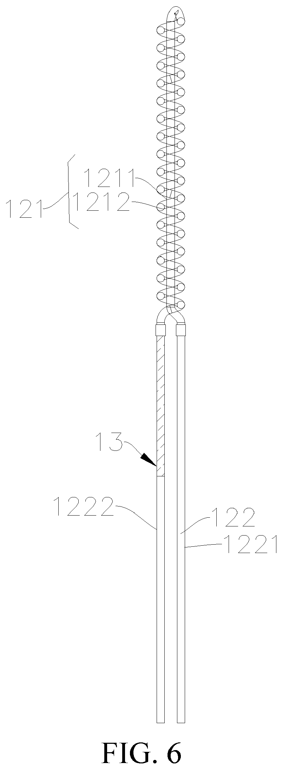

Referring to FIG. 3 to FIG. 6 together, in some embodiments, the heating portion 121 may be longitudinally arranged, and include a linear first heating section 1211 and/or a spiral second heating section 1212 wound around the first heating section 1211 and connected to the first heating section 1211. In some embodiments, the conductive portion 122 may include a first lead wire section 1221 connected to the first heating section 1211 and/or a second lead wire section 1222 connected to the second heating section 1212. In some embodiments, the temperature measurement unit 13 may at least partially replace the first heating section 1211 and/or the second heating section 1212 and/or the first lead wire section 1221 and/or the second lead wire section 1222, the temperature measurement unit 13 is connected to the heating portion 121, and the first heating section 1211, the second heating section 1212, the first lead wire section 1221, and the second lead wire section 1222 may be integrally formed or welded together. The temperature measurement unit 13 can quickly reflect the temperature change process of the heating portion 121 of the heating element 12 to accurately measure the temperature of the heating portion 121, so as to control the overall atomization temperature of the aerosol generating substrate 2 at 300-350°C, thereby achieving the precise atomization of the aerosol generating substrate 2 mainly in a wave band of 2-5 um. Specifically, referring to FIG. 3, in some embodiments, the heating portion 121 includes a spiral second heating section 1212. In some embodiments, the conductive portion 122 may include a first lead wire section 1221 and a second lead wire section 1222, and the temperature measurement unit 13 may replace the first heating section 1211 connected to the second heating section 1212. Referring to FIG. 4, the heating portion 121 includes a spiral second heating section 1212, the conductive portion 122 includes a second lead wire section 1222, and the temperature measurement unit 13 may replace the first heating section 1211 and the first lead wire section 1221. Referring to FIG. 5, the heating portion 121 includes a linear first heating section 1211 and a spiral second heating section 1212 wound around the first heating section 1211 and connected to the first heating section 1211, the conductive portion 122 includes a first lead wire section 1221, and the temperature measurement unit 13 may completely replace the second lead wire section 1222. Referring to FIG. 6, in some embodiments, the heating portion 121 includes a linear first heating section 1211 and a spiral second heating section 1212 wound around the first heating section 1211 and connected to the first heating section 1211, the temperature measurement unit 13 partially replaces the second lead wire section 1222, this part of the second lead wire section 1222 is connected to the second heating section 1212, and the conductive portion 122 includes a first lead wire section 1221 and another part of the second lead wire section 1222. As can be understood, a connection position between the temperature measurement unit 13 and the heating portion 121 may also be set as needed.

In some other embodiments, the heating portion 121 may further include a double-spiral section (not shown) arranged longitudinally, one end of the temperature measurement unit 13 is connected to the double-spiral section, and the other end of the temperature measurement unit 13 is connected to the conductive portion 122. Specifically, the conductive portion 122 includes a third lead wire section (not shown) and a fourth lead wire section (not shown) respectively connected to the double-spiral section. Specifically, the temperature measurement unit 13 may at least partially replace the third heating section. Alternatively, the temperature measurement unit 13 may also at least partially replace the third lead wire section and/or fourth lead wire section connected to the third heating section. As can be understood, a connection position between the temperature measurement unit 13 and the heating portion 121 may also be set as needed.

In yet another embodiment, the heating portion 121 may include multiple M-shaped or N-shaped sections (not shown) formed by winding or bending strip-shaped or linear heating wires, and the conductive portion includes a fifth lead wire section (not shown) and/or a sixth lead wire section (not shown) respectively connected to the M-shaped or N-shaped sections. In some embodiments, the temperature measurement unit 13 may at least partially replace the M-shaped or N-shaped sections. Alternatively, the temperature measurement unit 13 may also replace the fifth lead wire section and/or sixth lead wire section connected to the M-shaped or N-shaped sections. As can be understood, a connection position between the temperature measurement unit 13 and the heating portion 121 may also be set as needed.

In some embodiments, the temperature measurement unit 13 is at least partially made of a TCR (temperature coefficient of resistance) material. In some embodiments, the temperature coefficient of the TCR material is greater than 300, thereby making the measurement data more accurate. As can be understood, the temperature coefficient of the TCR material may also be set to be less than 300. In some embodiments, the TCR material may be strip-shaped. As can be understood, the TCR material is not limited to be strip-shaped, and it may also be sheetlike, columnar, spiral, etc.

In some embodiments, the fixing base 14 may be made of ceramic or PEEK high-temperature insulating material. It may include two fixing through holes 141 provided in the fixing base 14. The two fixing through holes 141 are configured to allow two conductive portions 122 to be inserted in.

In some embodiments, the heating structure further includes a supporting rod. The supporting rod is an insulating rod. The supporting rod may partially penetrate into the heating portion 121, may be located at the center of the heating portion 121, and may be insulated from the heating portion 121, and can play a role of supporting the heating portion 121. By arranging the supporting rod, the heating portion 121 can be supported to ensure that the heating element 12 is not completely deformed due to heating, thereby ensuring that the gap between the heating element 12 and the tube body 11 is uniform, and further ensuring the consistency of the temperature field. As can be understood, in some other embodiments, the supporting rod may not be arranged, but other structures may be arranged to support the heating portion 121.

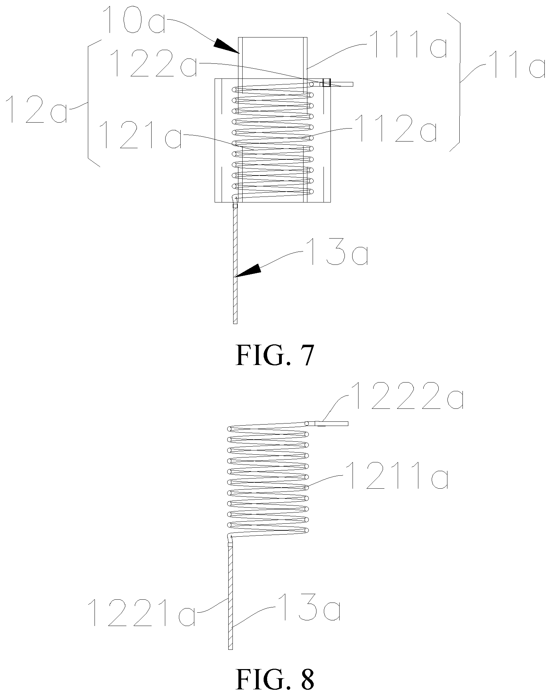

FIG. 7 shows a heating structure 10a in a second embodiment of the present disclosure, whose difference from that in the first embodiment lies in that the heating structure 10a is not limited to being partially inserted into the aerosol generating substrate to heat the aerosol generating substrate. In this embodiment, the heating structure 10a may be sleeved over the outer periphery of the substrate section of the aerosol generating substrate, and adopt a circumferential heating method to heat the aerosol generating substrate. In some embodiments, the heating structure 10a may include a tube body 11a, a heating element 12a, and a temperature measurement unit 13a. The heating element 12a and the tube wall of the tube body 11a are at least partially spaced apart. In some embodiments, the heating element 12a may include a heating portion 121a configured to radiate infrared light waves in a power-on state, and a conductive portion 122a arranged at one end of the heating portion 121a and configured to connect to power.

In some embodiments, the tube body 11a may include a first sleeve 111a and a second sleeve 112a sleeved over the outer periphery of the first sleeve 111a. The first sleeve 111a is a hollow structure with two ends that run through. The first sleeve 111a may be cylindrical, and the inner diameter thereof is slightly larger than the outer diameter of the aerosol generating substrate. A gap is provided between the first sleeve 111a and the second sleeve 112a, and the gap forms an accommodating cavity for accommodating the heating element 12a. The axial length of the first sleeve 111a may be greater than the axial length of the second sleeve 112a. The second sleeve 112a may be sleeved over the outer periphery of the first sleeve 111a. The second sleeve 112a may be cylindrical. The radial size of the second sleeve 112a may be larger than the radial size of the first sleeve 111a. In some embodiments, the heating element 12a is wound around the outer periphery of the first sleeve 111a and spaced apart from the outer wall of the second sleeve 112a, thereby creating a certain temperature difference between the inner wall of the accommodating cavity and the heating element 12 to achieve a thermal insulation effect. A heating cavity for heating the aerosol generating substrate is formed on the inner side of the first sleeve 111a.

In some embodiments, the inner side of the second sleeve 112a may be provided with a reflective layer, and the reflective layer is configured to reflect the heat of the heating element 12 and radiate it to the aerosol generating substrate to enhance the heating energy efficiency. As can be understood, the first sleeve 111a and the second sleeve 112a are not limited to be cylindrical, and they may also be in any other shape such as square column shape or elliptical column shape.

In some embodiments, the second sleeve 112a may further include a fixing structure, and the fixing structure is configured to fix the heating element 12a.

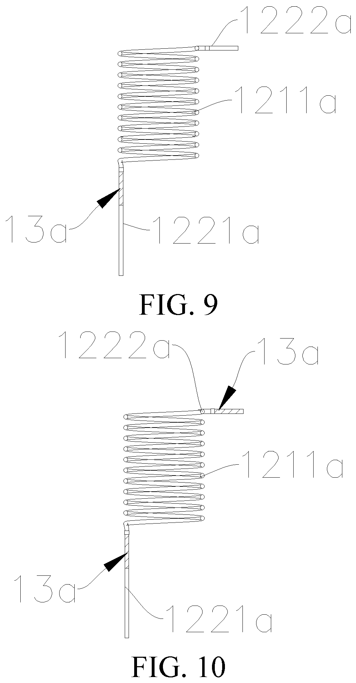

Referring to FIG. 8 to FIG. 10 together, in some embodiments, the heating portion 121a may be a spiral fourth heating section 1211a, and the conductive portion 122a includes a seventh lead wire section 1221a and/or an eighth lead wire section 1222a respectively connected to two opposite sides of the fourth heating section 1211a. The temperature measurement unit 13a may at least partially replace the seventh lead wire section 1221a and/or the eighth lead wire section 1222a connected to the heating portion 121a. The temperature measurement unit 13a can quickly reflect the temperature change process of the heating portion 121a of the heating element 12a to accurately measure the temperature of the heating element 12a, thereby achieving the precise atomization of the aerosol generating substrate. Specifically, referring to FIG. 8, in some embodiments, the temperature measurement unit 13a may completely replace the seventh lead wire section 1221a, and the conductive portion 122a includes the eighth lead wire section 1222a. Referring to FIG. 9, in some embodiments, the temperature measurement unit 13a may partially replace the seventh lead wire section 1221a connected to the heating portion 121a, and the conductive portion 122a includes the eighth lead wire section 1222a. Referring to FIG. 10, the temperature measurement unit 13a may partially replace the seventh lead wire section 1221a connected to the heating portion 121a and completely replace the eighth lead wire section 1222a. The conductive portion 122a includes another part of the seventh lead wire section 1221a. As can be understood, a connection position between the temperature measurement unit 13a and the heating portion 121a may also be set as needed.

As can be understood, the above embodiments show only several exemplary implementations of the present disclosure and are described in detail, which, however, are not to be construed as limitations to the patent scope of the present disclosure. It needs to be pointed out that those skilled in the art may freely combine the above technical features and may make several variations and improvements without departing from the concept of the present disclosure, all of which still fall within the scope of protection of the present disclosure. Therefore, any equivalent variations and modifications made within the scope of the claims of the present disclosure still fall within the scope covered by the claims of the present disclosure.

## Claims

1. A heating structure, comprising:
a heating element configured to radiate infrared light waves in a power-on state;
a tube body for the infrared light waves to pass through; and a temperature measurement unit for temperature measurement, wherein the heating element and a tube wall of the tube body are at least partially spaced apart,
wherein the heating element comprises a heating portion and a conductive portion electrically connected to the heating portion, and
wherein one end of the temperature measurement unit is connected to one end of the heating portion, and the other end of the temperature measurement unit is electrically connected to the conductive portion.

2. The heating structure of claim 1, wherein the temperature measurement unit is at least partially made of a TCR material.

3. The heating structure of claim 2, wherein a temperature coefficient of the TCR material is greater than 300.

4. The heating structure of claim 2, wherein the heating portion comprises a double-spiral section arranged longitudinally, and
wherein one end of the temperature measurement unit is connected to the double-spiral section, and the other end of the temperature measurement unit is connected to the conductive portion.

5. The heating structure of claim 4, wherein the temperature measurement unit is at least partially located within the double-spiral section.

6. The heating structure of claim 4, wherein the temperature measurement unit is located outside the double-spiral section.

7. The heating structure of claim 2, wherein the heating portion is longitudinally arranged and comprises a first heating section that is linear and a spiral second heating section wound around the first heating section and connected to one end of the first heating section, and
wherein one end of the temperature measurement unit is connected to the first heating section, and the other end of the temperature measurement unit is connected to the conductive portion.

8. The heating structure of claim 7, wherein the temperature measurement unit is at least partially located within the spiral second heating section.

9. The heating structure of claim 7, wherein the temperature measurement unit is located outside the spiral second heating section.

10. The heating structure of claim 2, wherein the heating portion is formed by bending or winding a heating wire and comprises at least one M-shaped or N-shaped section.

11. The heating structure of claim 10, wherein at least part of the temperature measurement unit and the heating portion j ointly form the M-shaped or N-shaped section.

12. The heating structure of claim 1, wherein the heating element is arranged on an inner side of the tube body, and the heating element is spaced apart from an inner wall of the tube body.

13. The heating structure of claim 1, wherein the tube body comprises a first sleeve and a second sleeve sleeved over an outer periphery of the first sleeve,
wherein a gap is provided between the first sleeve and the second sleeve, and the gap forms an accommodating cavity for accommodating the heating element, and
wherein the heating element is arranged on the outer periphery of the first sleeve and is spaced apart from an outer wall of the first sleeve, and a heating cavity for heating an aerosol generating substrate is formed on an inner side of the first sleeve.

14. The heating structure of claim 13, wherein an inner wall of the second sleeve is provided with a reflective layer for reflecting the infrared light waves.

15. The heating structure of claim 1, wherein a lower part of the tube body is provided with a fixing base, and the temperature measurement unit is arranged above the fixing base or is partially overlapped with the fixing base.

16. The heating structure of claim 1, wherein a highest working temperature of the heating element is 500°C-1300°C.

17. An aerosol generating device, comprising:
the heating structure of any one of claims 1 to 16.
